# EUROPEAN PATENT SPECIFICATION

(11) **EP 3 733 754 B1**
(45) Date of publication and mention of the grant of the patent: **04.11.2026**
(21) Application number: 18894012.6
(22) Date of filing: 27.12.2018
(51) Int. Cl.: C08K 5/3492, C08L 67/02, C08L 25/10, C08L 75/04, C08G 63/91

(54) **THERMOPLASTIC ELASTOMER RESIN COMPOSITION**
THERMOPLASTISCHE ELASTOMERHARZZUSAMMENSETZUNG
COMPOSITION DE RÉSINE ÉLASTOMÈRE THERMOPLASTIQUE

(30) Priority: 29.12.2017 KR 20170184532
(43) Date of publication of application: 04.11.2020
(73) Proprietor: Samyang Corporation, Seoul 03129 (KR)
(72) Inventor: KWON, Jae-Kwan, Sejong 30062 (KR); YOO, Jin, Cheongju-si Chungcheongbuk-do 28172 (KR); LEE, Cheol-Han, Geumsan-gun Chungcheongnam-do 32719 (KR); LIM, Yong-Chan, Gwacheon-si Gyeonggi-do 13835 (KR); PARK, Sang-Hyun, Daejeon 34071 (KR)
(74) Representative: Kordel, Mattias
(86) International application number: PCT/KR2018/016716
(87) International publication number: WO 2019/132534

(56) References cited:
- WO-A1-2007/029768
- WO-A1-2017/150668
- JP-A- 2005 075 864
- JP-A- 2005 255 775
- KR-A- 20170 133 407
- KR-B1- 101 258 021
- KR-B1- 101 762 792

## Description

### TECHNICAL FIELD

The present invention relates to a thermoplastic elastomer resin composition, and more specifically, a thermoplastic elastomer resin composition with reduced amount of outgassing generated during injection molding.

### BACKGROUND ART

Based on good heat resistance, chemical resistance and durability, thermoplastic elastomer resins are used in various forms across industries such as electric/electronic materials, biomaterials, automotive materials, etc., replacing the existing materials (WO 2017/150668 A1; WO 2007/029768 A1). In particular, thermoplastic polyester elastomer resins are used for CV joint boots, gearbox bellows, air ducts, etc. in automotive parts. Such automotive parts are manufactured by blow molding wherein they are produced through the blowing procedure in molten state. Thus, the resin in molten state should have a high melt viscosity and a high melt strength, and should maintain parison form during injection blowing.

In order to realize such characteristics for materials for blow molding, reactive additives have been used. If such a reactive additive is used, as well as realizing the characteristics for blow molding, it is also possible to impart good heat resistance to the molded article.

However, as for conventional reactive additives, there is a problem that such additives unreacted during the reaction extrusion may remain in the molded articles. The remaining reactive additives generate gases out during the blow molding, and they are gradually accumulated on the mold, thereby causing deposition on mold as the production procedures are repeated. Such substances deposited on mold cause problems in workability such as generation of faulty injection molding, increase in number of cleaning of the mold, etc.

Therefore, it is needed to develop a thermoplastic elastomer resin composition for blow molding which generates less amount of outgassing and thus resolves the problem of deposition on mold.

### PROBLEMS TO BE SOLVED

The purpose of the present invention is to provide a thermoplastic elastomer resin composition which generates less amount of outgassing and thus improves the workability in injection molding.

### TECHNICAL MEANS

In order to achieve the above-stated purpose, according to an aspect of the present invention, a thermoplastic elastomer resin composition according to claim 1 is provided. Preferable embodiments are encompassed by the dependent claims.

The thermoplastic elastomer resin composition comprises, based on 100 parts by weight of the composition,
95 to 99 parts by weight of thermoplastic elastomer resin;
as reactive additive, 0.3 to 1.0 parts by weight of compound containing one or more isocyanurate functional groups;
0.05 to 1 part by weight of antioxidant; and
surface modifier.

An embodiment not comprised by the invention relates to the thermoplastic elastomer resin composition,
wherein the thermoplastic elastomer resin comprises thermoplastic polyester elastomer (TPEE), thermoplastic styrene-butadiene elastomer (TPE-S), thermoplastic polyurethane (TPU), or two or more thereof.

According to the invention, the thermoplastic elastomer resin is thermoplastic polyester elastomer (TPEE),
wherein the thermoplastic polyester elastomer comprises hard segment comprising polymerized units derived from aromatic dicarboxylic compound and diol; and soft segment comprising polymerized units derived from polyalkylene oxide.

An embodiment not comprised by the invention relates to the thermoplastic elastomer resin composition,
wherein the aromatic dicarboxylic compound comprises terephthalic acid, isophthalic acid, 1,5-dinaphthalenedicarboxylic acid, 2,6-dinaphthalenedicarboxylic acid, dimethyl terephthalate, dimethyl isophthalate, or mixture of two or more thereof;
wherein the diol comprises ethyleneglycol, propyleneglycol, 1,4-butanediol, 1,5-pentanediol, 1,6-hexanediol, 1,4-cyclohexanedimethanol, or mixture of two or more thereof; and
wherein the polyalkylene oxide comprises polyoxyethylene glycol, polyoxypropylene glycol, polyoxytetramethylene glycol, or mixture of two or more thereof.

According to the invention, the aromatic dicarboxylic compound is dimethyl terephthalate, the diol is 1,4-butanediol, and the polyalkylene oxide is polyoxytetramethylene glycol.

A further embodiment not comprised by the invention relates to the thermoplastic elastomer resin composition,
wherein the thermoplastic polyester elastomer is branched by branching agent, and the branching agent comprises glycerol, pentaerythritol, neopentylglycol, or mixture of two or more thereof.

According to the invention, the thermoplastic polyester elastomer is branched by a branching agent, and the branching agent is glycerol.

A further embodiment not comprised by the invention relates to the thermoplastic elastomer resin composition,
wherein the compound containing one or more isocyanurate functional groups comprises hexamethylenediisocyanate-isocyanurate, isophoronediisocyanate-isocyanurate, toluenediisocyanate-isocyanurate, 4,4-cyclohexanebismethylisocyanate-isocyanurate, 4,4'-dicyclohexylmethanediisocyanate-isocyanurate, methylenediphenyldiisocyanate-isocyanurate, or mixture of two or more thereof.

According to the invention, the compound containing one or more isocyanurate functional groups is hexamethylenediisocyanate-isocyanurate.

According to the invention, the surface modifier is a silicone resin.

In an embodiment, the thermoplastic elastomer resin further comprises additive comprising light stabilizer, heat stabilizer, lubricant, reinforcing agent, dyestuff, pigment, or mixture of two or more thereof.

Another embodiment relates to a molded article comprising the thermoplastic elastomer resin composition.

### EFFECT OF THE INVENTION

According to an embodiment of the present invention relating to a thermoplastic polyester elastomer resin composition which generates less amount of outgassing and thus improves the workability in injection molding, it is possible to manufacture a product with a high viscosity suitable for blow molding by using commercial thermoplastic elastomer resin. In addition, outgassing-which is a problem of reaction extrusion-is reduced, and thus deposition on mold can be prevented and faulty injection molding due to the deposition on mold can also be prevented. As such, the effect of improving the workability in blow molding can be expected.

Furthermore, according to an embodiment of the present invention, it is possible to maintain the mechanical properties at the same or better level as compared with conventional technology, while resolving the problem of deposition on mold according to reduction of outgassing generation. Thus, the present invention can be utilized in manufacturing of blow molding products such as CV joint boots, gearbox bellows, air ducts, etc.

### CONCRETE MODE FOR CARRYING OUT THE INVENTION

The present invention is explained in more detail below. Prior to the explanation, it must be noted that the terms and expressions used in the present specification and claims should not be interpreted by restricting them according to conventional or lexical meaning, but should be interpreted with meaning and concept coinciding with the technical idea of the present invention, based on the principle that inventors can properly define the meanings of the terms in order to explain their inventions in the best way.

Therefore, the constitutions illustrated in the embodiments described in the present specification are just preferable ones, and they do not represent all technical ideas of the present invention. Accordingly, it should be understood that at the time of filing the present application, there may be various equivalents and modifications which can replace them.

In addition, "part(s) by weight" described in the present specification means weight ratio between the components included in the thermoplastic elastomer resin composition.

The thermoplastic elastomer resin composition according to one aspect of the present invention comprises, based on 100 parts by weight of the composition, 95 to 99 parts by weight of thermoplastic elastomer resin; and, as reactive additive, 0.3 to 1.0 parts by weight of compound containing one or more isocyanurate functional groups.

The thermoplastic elastomer resin composition according to an embodiment of the present invention consists of thermoplastic elastomer resin (TPE).

As the thermoplastic elastomer resin, a single conventional thermoplastic elastomer resin-or, as not comprised by the invention a combination of two or more thereof-can be used.

As not comprised by the invention, the thermoplastic elastomer resin can comprise, for example, thermoplastic polyester elastomer (TPEE) (including thermoplastic copolyester elastomer), thermoplastic styrene-butadiene elastomer (TPE-S), thermoplastic polyurethane (TPU), or two or more thereof.

According to the present invention, as the thermoplastic elastomer resin, thermoplastic polyester elastomer (TPEE) is used only, and the thermoplastic polyester elastomer (TPEE) can be conventionally used one, and hardness thereof can be controlled by containing a plasticizer. But, the hardness of the thermoplastic polyester elastomer is not especially limited, and it can be selected variously according to the articles to be applied.

The thermoplastic polyester elastomer is thermoplastic polymer wherein rigid hard segment and flexible soft segment are block-copolymerized.

According to the present invention, the hard segment comprise polymerized units derived from aromatic dicarboxylic compound and diol, and the soft segment comprise polymerized units derived from polyalkylene oxide.

As not comprised by the invention, the aromatic dicarboxylic compound can comprise terephthalic acid (TPA), isophthalic acid (IPA), 1,5-dinaphthalenedicarboxylic acid (1,5-NDCA), 2,6-dinaphthalenedicarboxylic acid (2,6-NDCA), dimethyl terephthalate (DMT), dimethyl isophthalate, or mixture of two or more thereof. Specifically, dimethyl terephthalate can be used.

As not comprised by the invention, as the diol, linear aliphatic diol with carbon number of 2 to 8 or cyclic aliphatic diol with carbon number of 3 to 8 can be used, and the diol can comprise, for example, ethyleneglycol, propyleneglycol, 1,4-butanediol, 1,5-pentanediol, 1,6-hexanediol, 1,4-cyclohexanedimethanol, or mixture of two or more thereof. Specifically, according to the invention, 1,4-butanediol is used.

As not comprised by the invention, the polyalkylene oxide can comprise polyoxyethylene glycol, polyoxypropylene glycol, polyoxytetramethylene glycol (PTMEG), or mixture of two or more thereof. Specifically, according to the invention, polyoxytetramethylene glycol is used.

According to the present invention, the thermoplastic polyester elastomer is branched by branching agent, and this is to increase the melt strength for improving the stability of the strand of polyester elastomer in its production, and thereby to increase the productivity.

As not comprised by the invention, the branching agent can comprise glycerol, pentaerythritol, neopentylglycol, or mixture of two or more thereof. Specifically, according to the invention, glycerol is used.

The thermoplastic polyester elastomer according to an embodiment of the present invention can be prepared generally through melt polymerization consisting of the two steps of oligomerization reaction and polymerization/condensation reaction. Preferably, it can be a branched thermoplastic polyester elastomer.

In an embodiment of the present invention, the branched thermoplastic polyester elastomer can be prepared by adding the above-explained components to a reactor and conducting melt polymerization consisting of the two steps of oligomerization reaction and polymerization/condensation reaction, in the presence of a proper catalyst (for example, tetra-n-butoxy titanium, TBT). The oligomerization reaction can be conducted at 140 to 215°C for 3 to 4 hours, and the polymerization/condensation reaction can be conducted at 210 to 250°C for 4 to 5 hours, with reducing the pressure from 760 torr to 0.3 torr in stepwise manner.

In an embodiment of the present invention, considering the mechanical strength and flexibility, the amount of the soft segment in the thermoplastic polyester elastomer can be 5 to 75% by weight, and more specifically 30 to 70% by weight, based on total 100% by weight of the thermoplastic polyester elastomer. In case where the amount of the soft segment in the thermoplastic polyester elastomer satisfies such a range, the hardness of the thermoplastic polyester elastomer is not too high, the flexibility is improved, and high performance of heat resistance can be realized.

According to an embodiment of the present invention, the intrinsic viscosity of the polyester elastomer can be 1.7 to 2.2 dl/g, and more specifically 1.9 to 2.0 dl/g.

The thermoplastic elastomer resin composition of the present invention comprises the compound containing one or more isocyanurate functional groups as reactive additive, in order to increase the melt viscosity and melt strength so that blow molding can be facilitated.

Concretely, the isocyanurate functional group is made by combining three (3) isocyanate compounds together, and has very good stability to heat. In comparison with conventional isocyanate compounds having two reactive groups or less, the isocyanurate functional group has more reactive groups. Thus, it can form urethane bonding with more chains of the thermoplastic elastomer resin, and accordingly shows better performance in increasing the molecular weight and can play a role of improving the heat stability. As a result, according to the use of the compound containing one or more isocyanurate functional groups as reactive additive, the mechanical properties are improved, and at the same time, the viscosity is decreased so that blow molding can be facilitated.

In addition, since the isocyanurate functional group contained in the reactive additive of the present invention has one more isocyanate group as compared with conventional isocyanate compounds, it can perform more reactions with the thermoplastic elastomer resin and thus the possibility of unreacted material's escape is less, and since a compound having isocyanurate functional group itself shows good stability to heat, it is possible to reduce the possibility of on-mold deposition of gas generated out due to decomposition during injection molding.

As not comprised by the invention, as the reactive additive, any compound containing one or more isocyanurate functional groups can be used without limitation. For example, the compound containing one or more isocyanurate functional groups can comprise hexamethylenediisocyanate-isocyanurate, isophoronediisocyanate-isocyanurate, toluenediisocyanate-isocyanurate, 4,4-cyclohexanebismethylisocyanate-isocyanurate, 4,4'-dicyclohexylmethanediisocyanate-isocyanurate, methylenediphenyldiisocyanate-isocyanurate, or mixture of two or more thereof, but not limited thereto.

The thermoplastic elastomer resin composition of the present invention comprises, based on 100 parts by weight of the composition, 95 to 99 parts by weight of thermoplastic elastomer resin; and 0.3 to 1.0 parts by weight of the reactive additive.

In an embodiment of the present invention, the amount of the reactive additive can be, based on 100 parts by weight of the composition, specifically 0.5 to 1 part by weight. If, as not comprised by the invention, the amount of the reactive additive based on 100 parts by weight of the composition is less than 0.2 part by weight, the melt viscosity decreases and thus it is difficult to use as a material for blow molding, and if, as also not comprised by the invention, the amount of the reactive additive is greater than 2.5 parts by weight, the generated outgassing amount increases and the deposition on mold occurs, resulting in poor workability in injection molding.

The thermoplastic elastomer resin composition of the present invention further comprises antioxidant in order to prevent deterioration and oxidation of the thermoplastic elastomer resin in the procedure of injection molding at high temperature.

The kind of antioxidant is not especially limited, and any antioxidant conventionally used in this field of art can be used without limitation. For example, hindered amine-based antioxidant, hindered phenol-based antioxidant, phosphite-based antioxidant, amide-based antioxidant, thioester-based antioxidant, or a mixture of two or more thereof can be used as the antioxidant, but not limited thereto.

More concretely, 4,4'-bis(α,α-diphenylbenzyl)diphenyl amine, octadecyl-3-(3,5-di-tert-butyl-4-hydroxyphenyl)-propionate, or a mixture of two or more thereof can be used as the antioxidant, but not limited thereto.

The amount of the antioxidant is, based on 100 parts by weight of the composition, 0.05 to 1 part by weight, and preferably 0.1 to 0.5 part by weight.

In addition to the components explained above, the thermoplastic elastomer resin composition of the present invention can further comprise one or more additives conventionally used in thermoplastic elastomer resin compositions. Such an additive can be, for example, light stabilizer, heat stabilizer, lubricant, reinforcing agent, dyestuff, pigment, or mixture of two or more thereof, but not limited thereto. When compounding with the thermoplastic elastomer resin and being injected into a mold, the surface modifier as an additive migrates to the surface of the injection-molded article and protects the surface, and at the same time, it provides the effect of easy release from the injection mold and thus can increase the moldability.

The amount of the additive, including the surface modifier, is not especially limited, and it can be used without limitation within the scope not adversely affecting the properties desired in the present invention. For example, the amount of the additive can be, based on 100 parts by weight of the composition, 0.1 to 5 parts by weight, and specifically 0.5 to 3 parts by weight, but not limited thereto.

The thermoplastic elastomer resin composition according to an embodiment of the present invention can be prepared by feeding the above-explained thermoplastic elastomer resin, reactive additive, and selectively antioxidant and optional additive into an extruder, and conducting extrusion while mixing them in the extruder.

As the extruder, a twin-screw or single-screw extruder can be used, and L/D (length/diameter) of the extruder can be 20 to 35, but not limited thereto.

As the extrusion condition, the extruder temperature of 180 to 220°C and RPM of 150 to 350 can be used, but not limited thereto.

The thermoplastic elastomer resin composition of the present invention prepared as above has high melt viscosity and high melt strength, and thus can be utilized as a material for blow molding.

According to other aspect of the present invention, a molded article comprising the thermoplastic elastomer resin composition is provided.

The molded articles provided according to an embodiment of the present invention can be CV joint boots, gearbox bellows or air ducts of cars.

In order to facilitate understanding, the present invention is explained in more detail through the following examples. However, examples according to the present invention can be modified to other types variously, and it should not be interpreted that the scope of the present invention is limited to the following examples. The examples of the present invention are provided in order to explain the present invention more completely to a skilled person in the art.

### EXAMPLES

### <Preparation of thermoplastic polyester elastomer resin>

### Preparation Example 1: Preparation of TPEE with shore hardness-D of 40

Dimethyl terephthalate (DMT) (34.60 parts by weight), 1,4-butanediol (25.0 parts by weight), polyoxytetramethylene glycol (PTMEG) with molecular weight of 2,000 (40.20 parts by weight) and glycerol (0.065 part by weight) were put into a reactor for oligomerization, and as a catalyst, tetra-n-butoxy titanium (TBT) (0.025 part by weight) was added thereto. The reaction temperature was elevated from 140°C to 215°C for 120 minutes, and while maintaining 215°C, the reaction was conducted for additional 120 minutes. The reaction was terminated at the timing when the reaction ratio calculated from the amount of methanol as reaction effluent became 99% or higher. Then, the catalyst TBT (0.04 part by weight) and a heat stabilizer (Irganox 1010) (0.07 part by weight) were added, and the polymerization/condensation reaction was conducted. The polymerization/condensation reaction was conducted by elevating the temperature from 215°C to 250°C for 120 minutes and reacting for additional 120 minutes while maintaining 250°C. At that time, the pressure was lowered from 760 torr to 0.3 torr for 1 hour, and set to a vacuum condition of 0.3 torr or lower for the remaining 3 hours, but the final pressure was controlled to be 0.3 torr or lower, to prepare TPEE with shore hardness-D of 40. The intrinsic viscosity of the TPEE prepared as above was 1.7 dl/g when measured in a solvent of phenol/tetrachloroethane = 50/50.

### <Preparation of thermoplastic elastomer resin composition>

### Examples 1 to 4 and Comparative Examples 1 to 5

The resin compositions of the Examples and Comparative Examples were prepared according to the compositional ratios described in the following Table 1. The raw materials consisting of the TPEE resin prepared in the above Preparation Example 1 and the additives were fed simultaneously into a twin-screw extruder and then extruded. The temperature of the extruder was set to 150°C at the hopper and 190°C to 230°C at the other parts for extrusion, a twin screw (L/D=40) was used, the diameter of the die was 26 phi, and two (2) kneading blocks were used. The feed rate of the resin was set to be 10 kg/hr to 12 kg/hr, and the rotation speed of the extruder screw was set to be 150 rpm to 200 rpm for extrusion.

Thereafter, the resin composition obtained from the extrusion procedure was cooled in a cooling bath, and then pelletized to prepare pellets of the thermoplastic elastomer resin composition.

**[Table 1]**

| Composition (% by weight) | Examples | | | | Comparative Examples | | | | |
|---|---|---|---|---|---|---|---|---|---|
| | 1 | 2 | 3 | 4 | 1 | 2 | 3 | 4 | 5 |
| TPEE | 97.9 | 97.8 | 97.1 | 95.6 | 98.0 | 95.1 | 97.6 | 97.1 | 95.6 |
| Reactive additive | 0.2 | 0.3 | 1.0 | 2.5 | 0.1 | 3.0 | - | - | - |
| Naphthalene diisocyanate | - | - | - | - | - | - | 0.5 | 1.0 | 2.5 |
| Silicone resin | 0.5 | 0.5 | 0.5 | 0.5 | 0.5 | 0.5 | 0.5 | 0.5 | 0.5 |
| Heat stabilizer | 1 | 1 | 1 | 1 | 1 | 1 | 1 | 1 | 1 |
| Antioxidant 1 | 0.2 | 0.2 | 0.2 | 0.2 | 0.2 | 0.2 | 0.2 | 0.2 | 0.2 |
| Antioxidant 2 | 0.2 | 0.2 | 0.2 | 0.2 | 0.2 | 0.2 | 0.2 | 0.2 | 0.2 |

| | | | | | | | | | |
|---|---|---|---|---|---|---|---|---|---|
| Examples 1 and 4 are comparative examples. | | | | | | | | | |

### <Explanation of the components>

TPEE: The thermoplastic polyester elastomer prepared in Preparation Example 1
Reactive additive: Hexamethylenediisocyanate(HDI) isocyanurate (trimer) (TLA-100, Asahikasei Co., Ltd.)
Naphthalene diisocyanate: HARTDUR 115 (Johnson fine chemical Co., Ltd.)
Silicone resin: MB50-010 (Dow Corning Co., Ltd.)
Heat stabilizer: NAUGAURD 445 (Chemtura Co., Ltd.)
Antioxidant 1: Sulfur-based antioxidant (Irganox 412S, BASF Co., Ltd.)
Antioxidant 2: phenol-based antioxidant (SONG 1076, Songwon Industry Co., Ltd.)

For the thermoplastic elastomer resin compositions prepared as above, properties of the following items were measured to confirm the properties thereof, and the results are shown in the following Table 2.
(1) Tensile strength: evaluated according to ASTM D638
(2) Tensile elongation ratio: evaluated according to ASTM D638
(3) Modulus: evaluated according to ASTM D638
(4) Melt index: measured at 230°C under 10.0 kg load after retention for 3 minutes according to ASTM D1238
(5) Outgassing: measured through GC/MS analysis by assessing the gases generated during GC/MS analysis at 230°C for the same amount of the sample, and calculating the total area of the gases generated out (total outgassing amount)
(6) Deposition on mold: determined by the presence/absence of white deposit on gas bent part of the mold after continuous injection of 50 rectangular samples with 8 cm × 6 cm × 6.5mm size

**[Table 2]**

| | Examples | | | | Comparative Examples | | | | |
|---|---|---|---|---|---|---|---|---|---|
| | 1 | 2 | 3 | 4 | 1 | 2 | 3 | 4 | 5 |
| Tensile strength (Kg_{f}) | 225 | 225 | 220 | 220 | 180 | 215 | 210 | 200 | 230 |
| Tensile elongation ratio (%) | >400 | >400 | >400 | >400 | >400 | >400 | >400 | >400 | >400 |
| Modulus | 642 | 640 | 640 | 635 | 625 | 652 | 650 | 647 | 650 |
| Melt index (g/10 min) | 13 | 12 | 10 | 10 | 25 | 9 | 10 | 9.5 | 9 |
| Outgassing area | 3.1 x 10⁷ | 3.1 x 10⁷ | 3.2 x 10⁷ | 4.1 x 10⁷ | 2.9 x 10⁷ | 5.6 x 10⁷ | 5.1 x 10⁷ | 5.9 x 10⁷ | 6.3 x 10⁷ |
| Deposition on mold | No | No | No | No | No | Yes | Yes | Yes | Yes |

As shown in the above Table 2, in case of Examples 2-3 according to the present invention, the mechanical properties such as tensile strength, tensile elongation ratio and modulus were good, and the melt viscosity was also high (low melt index) so as to be suitable as a material for blow molding, and in particular, it could be confirmed that the conventional problem of outgassing generation was remarkably reduced and no deposition on mold was generated.

However, in case of Comparative Example 1 using a smaller amount of the compound containing isocyanurate functional group, the melt viscosity was too low (high melt index) so as not to be suitable as a material for blow molding, and in case of Comparative Example 2 using a larger amount of the compound containing isocyanurate functional group, the amount of outgassing was large and deposition on mold was generated. **In** case of Comparative Examples 3 to 5 using a conventional isocyanate-based compound instead of the compound containing isocyanurate functional group, even if used in a proper amount, it could be confirmed that the amount of outgassing was large and deposition on mold was generated.

## Claims

1. A thermoplastic elastomer resin composition comprising, based on 100 parts by weight of the composition,
95 to 99 parts by weight of thermoplastic elastomer resin;
as reactive additive, 0.3 to 1.0 parts by weight of compound containing one or more isocyanurate functional groups;
0.05 to 1 part by weight of antioxidant; and
surface modifier; wherein
the thermoplastic elastomer resin consists of thermoplastic polyester elastomer (TPEE) only, wherein
the thermoplastic polyester elastomer comprises hard segment comprising polymerized units derived from aromatic dicarboxylic compound and diol; and soft segment comprising polymerized units derived from polyalkylene oxide, wherein
the thermoplastic polyester elastomer is branched by a branching agent, and the branching agent is glycerol, wherein
the compound containing one or more isocyanurate functional groups is hexamethylenediisocyanate-isocyanurate, wherein
the aromatic dicarboxylic compound is dimethyl terephthalate, wherein
the diol is 1,4-butanediol, wherein
the polyalkylene oxide is polyoxytetramethylene glycol, and wherein
the surface modifier is a silicone resin.

2. The thermoplastic elastomer resin composition of claim 1,
which further comprises additive comprising light stabilizer, heat stabilizer, lubricant, reinforcing agent, dyestuff, pigment, or mixture of two or more thereof.

3. A molded article comprising the thermoplastic elastomer resin composition of any one of claims 1 and 2.

## Patentansprüche

1. Thermoplastische Elastomerharzzusammensetzung, umfassend, bezogen auf 100 Gewichtsteile der Zusammensetzung,
95 bis 99 Gewichtsteile eines thermoplastischen Elastomerharzes;
als ein reaktives Additiv, 0,3 bis 1,0 Gewichtsteile einer Verbindung, die Isocyanurat als eine oder mehrere funktionelle Gruppen enthält;
0,05 bis 1 Gewichtsteil eines Antioxidans; und
einen Oberflächenmodifikator; wobei
das thermoplastische Elastomerharz ausschließlich aus thermoplastischem Polyesterelastomer (TPEE) besteht, wobei
das thermoplastische Polyesterelastomer ein Hartsegment umfasst, das polymerisierte Einheiten umfasst, die von einer aromatischen Dicarbonsäureverbindung und einem Diol abgeleitet sind; und ein Weichsegment umfasst, das polymerisierte Einheiten umfasst, die von einem Polyalkylenoxid abgeleitet sind, wobei
das thermoplastische Polyesterelastomer durch ein Verzweigungsmittel verzweigt ist und das Verzweigungsmittel Glycerin ist, wobei
die Verbindung, die Isocyanurat als eine oder mehrere funktionelle Gruppen enthält, Hexamethylendiisocyanat-Isocyanurat ist, wobei
die aromatische Dicarbonsäureverbindung Dimethylterephthalat ist, wobei
das Diol 1,4-Butandiol ist, wobei
das Polyalkylenoxid Polyoxytetramethylenglykol ist, und wobei
der Oberflächenmodifikator ein Silikonharz ist.

2. Thermoplastische Elastomerharzzusammensetzung nach Anspruch 1,
die ferner ein Additiv enthält, das einen Lichtstabilisator, einen Wärmestabilisator, ein Schmiermittel, ein Verstärkungsmittel, einen Farbstoff, ein Pigment, oder eine Mischung aus zwei oder mehr davon umfasst.

3. Formkörper, umfassend die thermoplastische Elastomerharzzusammensetzung nach einem der Ansprüche 1 und 2.

## Revendications

1. Composition de résine élastomère thermoplastique comprenant, sur la base de 100 parties en poids de la composition,
95 à 99 parties en poids de résine élastomère thermoplastique ;
en tant qu'additif réactif, 0,3 à 1,0 partie en poids de composé contenant un ou plusieurs groupes fonctionnels isocyanurates ;
0,05 à 1 partie en poids d'antioxydant ; et
un modificateur de surface ; dans laquelle
la résine élastomère thermoplastique est constituée uniquement d'élastomère de polyester thermoplastique (TPEE), dans laquelle
l'élastomère polyester thermoplastique comprend un segment dur comprenant des unités polymérisées dérivées d'un composé dicarboxylique aromatique et d'un diol ; et un segment mou comprenant des unités polymérisées dérivées d'oxyde de polyalkylène, dans lequel l'élastomère polyester thermoplastique est ramifié par un agent de ramification, et l'agent de ramification est le glycérol, dans laquelle
le composé contenant un ou plusieurs groupes fonctionnels isocyanurate est l'hexaméthylènediisocyanate-isocyanurate, dans laquelle
le composé dicarboxylique aromatique est le téréphtalate de diméthyle, dans lequel le diol est le butane-1,4-diol, dans laquelle
l'oxyde de polyalkylene est le polyoxytétraméthylène glycol, et dans lequel le modificateur de surface est une résine de silicone.

2. Composition de résine élastomère thermoplastique selon la revendication 1,
qui comprend en outre un additif comprenant un stabilisant à la lumière, un stabilisant thermique, un lubrifiant, un agent de renforcement, un colorant, un pigment ou un mélange de deux ou plusieurs de ceux-ci.

3. Article moulé comprenant la composition de résine élastomère thermoplastique selon l'une quelconque des revendications 1 et 2.
